# EUROPEAN PATENT APPLICATION

(11) **EP 4 604 284 A1**
(43) Date of publication of application: **20.08.2025**
(21) Application number: 25155014.1
(22) Date of filing: 30.01.2025
(51) Int. Cl.: H01M 50/15, H01M 50/155, H01M 50/183, H01M 50/186, H01M 50/193, H01M 50/188, H01M 50/553, B29C 33/00, B29C 37/00, B29C 45/14

(54) **METHOD OF MANUFACTURING ELECTRICITY STORAGE DEVICE CASE COMPONENT, ELECTRICITY STORAGE DEVICE CASE COMPONENT, AND ELECTRICITY STORAGE DEVICE**

(30) Priority: 14.02.2024 JP 2024020529
(71) Applicant: Prime Planet Energy & Solutions, Inc., Chuo-ku, Tokyo 103-0022 (JP)
(72) Inventor: TOMITA, Yuji, Tokyo, 103-0022 (JP)
(74) Representative: Kuhnen & Wacker Patent- und Rechtsanwaltsbüro PartG mbB

(57) **Abstract**

A method of manufacturing a case component includes the steps of preparing a plate member, placing the plate member in a mold, and integrally molding a sealing member with the plate member. In the step of integrally molding the sealing member with the plate member, a resin is poured into the mold to integrally mold the plate member and the sealing member that seals the plate member. The mold includes a protruding portion to be pressed against a circumferential periphery around the through hole of the plate member. The step of placing the plate member in the mold includes pressing the protruding portion of the mold against the circumferential periphery around the through hole of the plate member. The plate member includes a recessed portion formed between the through hole and a position against which the protruding portion of the mold is to be pressed.

## Description

The present disclosure relates to a method of manufacturing an electricity storage device case component, an electricity storage device case component, and an electricity storage device.

### BACKGROUND

JP 2005-004968 A discloses a method of manufacturing a sealing plate by integrating an electrode terminal with a sealing plate main body made of a polymer material by insert molding. In the manufacturing method disclosed in the publication, the molding die is brought into pressure contact with an end face of the electrode terminal when mold clamping of a molding die used for insert molding, to thereby dam off the flow of the molding material for the sealing plate main body. The molding die is provided in advance with an annular-shaped protruding portion that bites into the end face of the electrode terminal at the time of mold clamping. The diameter dimension of the annular-shaped protruding portion is set to be smaller than the diameter dimension of the outer circumferential edge portion of the electrode terminal. It is stated that such a manufacturing method can effectively reduce the permeating of the electrolyte solution into the joint surface of the sealing plate main body and the electrode terminal.

### SUMMARY

For case components used for electricity storage devices, it is necessary that plate members and sealing members be firmly joined to each other.

According to the present disclosure, a method of manufacturing an electricity storage device case component includes: a step of preparing plate member in which a through hole is formed; a step of placing the plate member in a mold; and a step of integrally molding a sealing member sealing the plate member with the plate member by pouring a resin into the mold. The mold includes a protruding portion to be pressed against a circumferential periphery around the through hole of the plate member. The step of placing the plate member in the mold includes pressing the protruding portion of the mold against the circumferential periphery around the through hole of the plate member. The plate member includes a recessed portion formed between the through hole and a position against which the protruding portion of the mold is to be pressed.

The case component manufactured by such a manufacturing method shows good joining capability between the plate member and the sealing member.

### BRIEF DESCRIPTION OF THE DRAWINGS

Fig. 1 is a perspective view illustrating an electricity storage device 100.
Fig. 2 is a flowchart illustrating a method of manufacturing an electricity storage device case component 14.
Fig. 3 is a perspective view illustrating a plate member 14a.
Fig. 4 is a cross-sectional view taken along line IV-IV in Fig. 3.
Fig. 5 is a schematic view of the plate member 14a disposed in a mold 60.
Fig. 6 is another schematic view of the plate member 14a disposed in the mold 60.
Fig. 7 is a schematic view of a case component 14 integrally molded inside the mold 60.
Fig. 8 is a schematic view illustrating the way in which the plate member 14a deforms.
Fig. 9 is a cross-sectional view of the electricity storage device 100.

### DETAILED DESCRIPTION

Hereinbelow, embodiments of the technology according to the present disclosure will be described with reference to the drawings. It should be noted, however, that the disclosed embodiments are, of course, not intended to limit the disclosure. The drawings are depicted schematically and do not necessarily accurately depict actual objects. The features and components that exhibit the same effects are designated by the same reference symbols as appropriate, and the description thereof will not be repeated as appropriate. In the following description, reference characters L, R, F, Rr, U and D in the drawings represent left, right, front, rear, up, and down, respectively, and reference characters X, Y, and Z in the drawings represent the shorter-side axis, the longer-side axis, and the heightwise axis, respectively. These directional terms are, however, merely provided for purposes in illustration and are not intended to limit the present disclosure in any way.

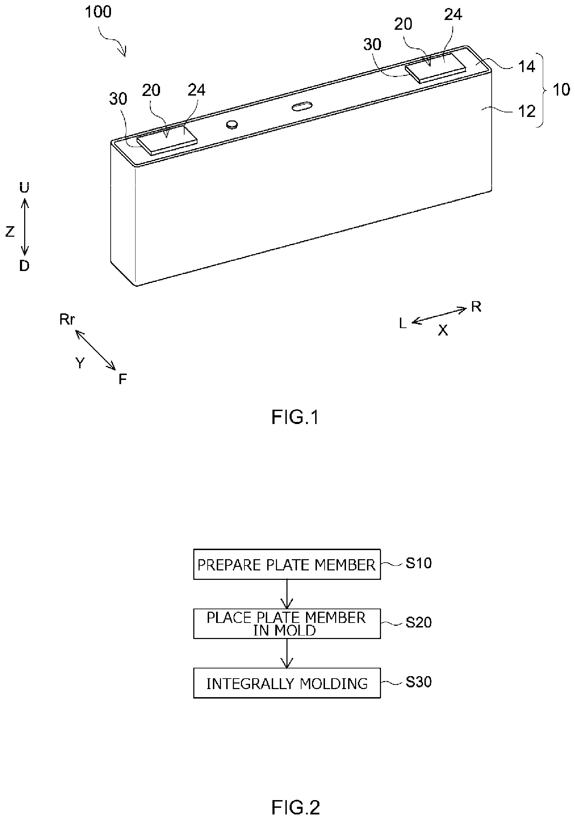

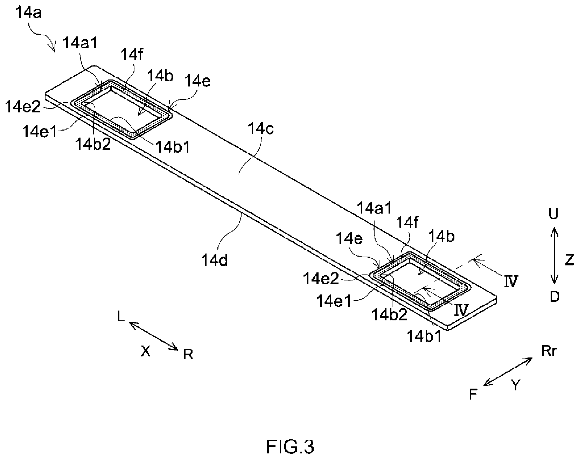

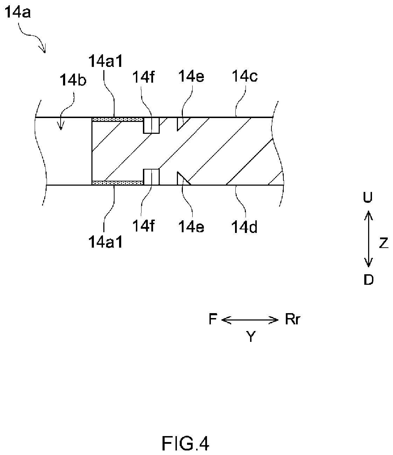

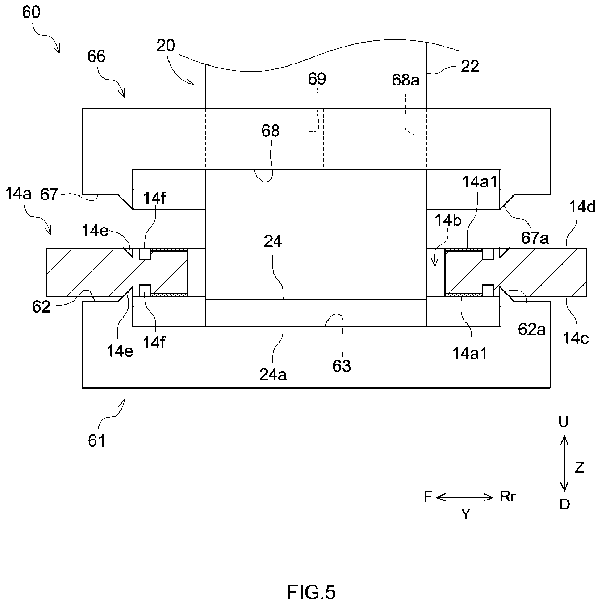

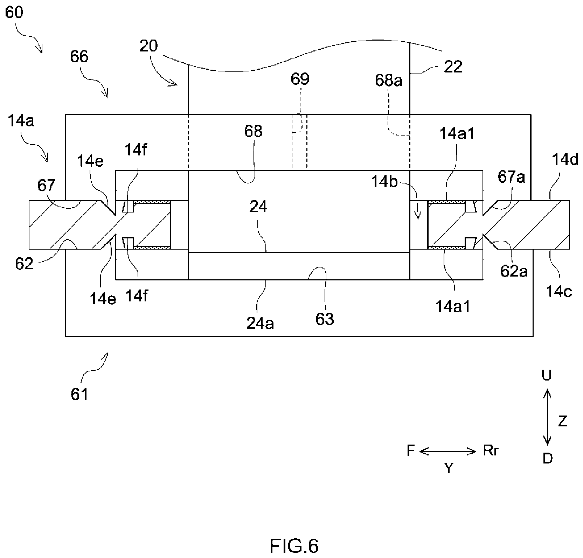

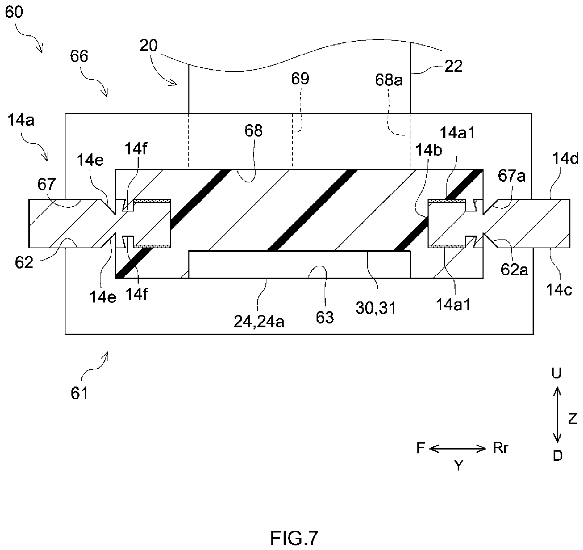

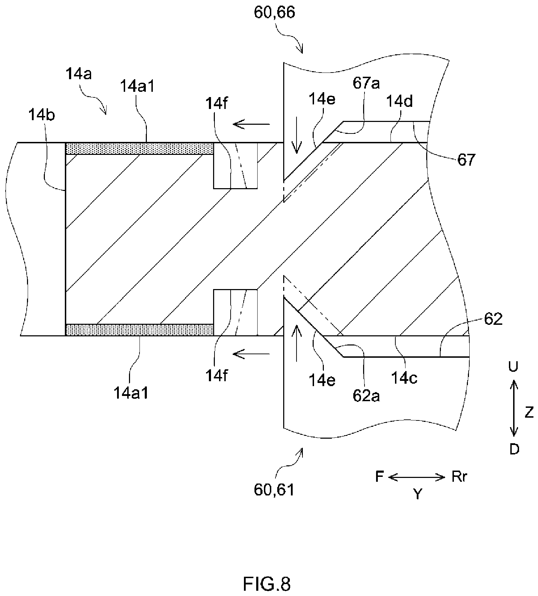

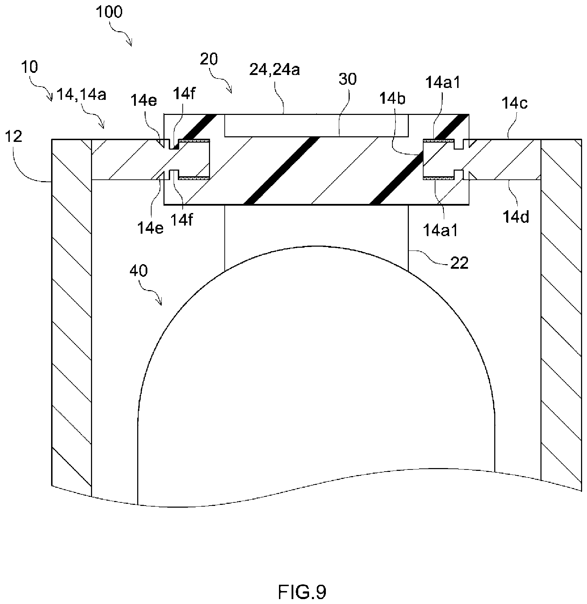

Fig. 1 is a perspective view illustrating an electricity storage device 100. Fig. 2 is a flowchart illustrating a method of manufacturing an electricity storage device case component 14. Fig. 3 is a perspective view illustrating a plate member 14a. Fig. 4 is a cross-sectional view taken along line IV-IV in Fig. 3. Figs. 5 and 6 are each a schematic view of the plate member 14a disposed in a mold 60. Fig. 5 shows the plate member 14a that is placed on a lower mold 61. Fig. 6 shows the plate member 14a that is sandwiched between the lower mold 61 and an upper mold 66. Fig. 7 is a schematic view of a case component 14 integrally molded inside the mold 60. In Figs. 5 to 7, the mold 60 is not hatched. Fig. 8 is a schematic view illustrating the way in which the plate member 14a deforms. Fig. 9 is a cross-sectional view of the electricity storage device 100. In Fig. 8, portions of the mold 60 that bite into the plate member 14a and portions of the plate member 14a that undergo deformation are indicated by dash-dot-dot lines. Fig. 9 schematically shows a case component 14 attached to a case 10.

As illustrated in Fig. 1, the electricity storage device 100 includes an electrode body 40 (see Fig. 9) and a case 10 that houses the electrode body 40. Although not shown in the drawings, the case 10 also houses an electrolyte solution therein. The electrode body 40 and the electrolyte solution are power-generating elements of the electricity storage device 100. For these power-generating elements, it is possible to use any type of power-generating elements used for conventionally known electricity storage devices without any particular limitation. Therefore, detailed descriptions thereof will not be provided herein.

In the present description, the term "electricity storage device" is meant to encompass any type of device in which charge-discharge reactions are caused by migration of charge carriers between a pair of electrodes (positive electrode and negative electrode). Accordingly, the electricity storage devices according to the technology disclosed herein are intended to encompass secondary batteries, such as lithium-ion secondary batteries, nickel-metal hydride batteries, and nickel-cadmium batteries, as well as capacitors, such as lithium-ion capacitors and electric double-layer capacitors.

In the present description, the term "case component" refers to a component that makes up the case of an electricity storage device. For example, the electricity storage device 100 shown in Fig. 1 employs a case 10 that is made up of a case main body 12 and a lid 14. The case main body 12 includes an opening at its top. The lid 14 is a component that is attached to the opening of the case main body 12 to seal the opening. In such a case 10, the case main body 12 and the lid 14 each are case components. In the embodiment shown in Fig. 1, electrode terminals 20 and sealing members 30 are attached to the lid 14 as a case component. Although an embodiment in which the electrode terminals 20 and the sealing members 30 are attached to the lid 14 is shown herein, it is also possible that the electrode terminals 20 and the sealing members 30 may be attached to the case main body 12. The case components may be made of aluminum or aluminum alloy. Hereinafter, a method of manufacturing a case component 14 as the lid 14 will be described with reference to the embodiment shown in Fig. 1.

### Method of Manufacturing Electricity Storage Device Case Component 14

A method of manufacturing an electricity storage device case component (hereinafter also referred to simply as "case component") 14 includes, as illustrated in Fig. 2, step S10 of preparing a plate member 14a, step S20 of placing the plate member 14a in a mold 60, and step S30 of integrally molding a sealing member 30 with the plate member 14a.

### Step S10 of Preparing Plate Member 14a

Step S10 of preparing a plate member 14a involves preparing a plate member 14a in which through holes 14b are formed, as illustrated in Fig. 3. The plate member 14a, also referred to as a sealing plate, is a member that closes the case main body 12 (see Fig. 1) that houses the electrode body. The plate member 14a may be made of the same material as that for the case main body 12, which may be, for example, aluminum or aluminum alloy. The plate member 14a is an oblong plate-shaped member.

Through holes 14b are provided at opposite ends of the plate member 14a. Each through hole 14b is a substantially rectangular-shaped opening as viewed in plan. The planar shape of the through hole 14b is not particularly limited as long as an electrode terminal 20 (see Fig. 1) can be inserted therethrough. The planar shape of the through hole 14b may be a circular shape, an elliptical shape, or the like.

An outer surface 14c of the plate member 14a includes a groove 14e surrounding the through hole 14b. Likewise, an inner surface 14d of the plate member 14a also includes another groove 14e (see Fig. 4) surrounding the through hole 14b. The grooves 14e are formed at a position against which the mold 60 (see Fig. 5) is to be pressed in a later step.

Step S10 of preparing the plate member 14a may include forming a recessed portion 14f in the plate member 14a. The method of forming the recessed portion 14f and the groove 14 is not particularly limited. In step S10 of preparing the plate member 14a, the recessed portion 14f may be formed in the plate member 14a by conventionally known methods, such as cutting and forging.

In the plate member 14a, the recessed portion 14f is formed between the through hole 14b and the position (i.e., the groove 14e) against which the mold 60 (see Fig. 5) is to be pressed. In other words, the recessed portion 14f is provided between the through hole 14b and the position against which the mold 60 is to be pressed. The recessed portion 14f is provided proximate to the groove (the position against which the mold 60 is to be pressed). The recessed portion 14f is provided at locations closer to the groove 14e than the through hole 14b. The recessed portion 14f is provided on both surfaces, i.e., the outer surface 14c and the inner surface 14d, of the plate member 14a.

The recessed portion 14f is in a substantially rectangularly recessed shape (see Fig. 4) when viewed in a direction in which the groove 14e extends. In this embodiment, the recessed portion 14f surrounds the circumferential periphery around the through hole 14b entirely circumferentially. The recessed portion 14f is continuous in a substantially rectangular shape in the circumferential periphery around the through hole 14b, as viewed in plan. It should be noted that the recessed portion 14f is not necessarily continuous entirely circumferentially in the circumferential periphery around the through hole 14b. The recessed portion 14f may be discontinuous in the circumferential periphery around the through hole 14b. In the circumferential periphery around the through hole 14b, it is possible to provide a portion in which the recessed portion 14f is not formed partially.

Step S10 of preparing the plate member 14a may also include forming a second recessed portion in the plate member 14a. The second recessed portion may be formed in the same method as the method of forming the recessed portions 14f. In the plate member 14a, the second recessed portion may be provided at a position against which the mold 60 is to be pressed. Herein, the second recessed portion is provided on both surfaces, i.e., the outer surface 14c and the inner surface 14d, of the plate member 14a. In this embodiment, each of the grooves 14e corresponds to the second recessed portion. Hereinafter, the groove 14e may also be referred to as the second recessed portion 14e. In this embodiment, the second recessed portion 14e surrounds the circumferential periphery entirely around the through hole 14b (and the recessed portion 14f). The second recessed portion 14e is continuous in a substantially rectangular shape around the recessed portion 14f, as viewed in plan.

The second recessed portion 14e includes linear portions 14e1, which are parallel to linear portions 14b1 of the substantially rectangular-shaped through hole 14b, and corner portions 14e2, which connect adjacent linear portions 14e1. The linear portions 14e1 of the second recessed portion 14e are provided spaced apart from the linear portions 14b1 of the through hole 14b substantially at a certain distance, and are substantially parallel to the linear portions 14b1 of the through hole 14b. The corner portions 14e2 of the second recessed portion 14e are in a substantially circular arc shape, and connect the end portions of adjacent linear portions 14e1.

The shape of the second recessed portion 14e is not limited to any particular shape. In this embodiment, the second recessed portion 14e is recessed in a substantially wedge shape when viewed in a direction in which the groove 14e extends. The second recessed portion 14e is narrower toward the depth direction. The shape of the second recessed portion 14e may be determined according to the shape of the mold 60 that presses. Note that the second recessed portion 14e may be provided partially in the circumferential periphery around the recessed portion 14f. When the second recessed portion 14e is provided partially, it may be provided at least on the outside of the corner portions 14b2 of the rectangular-shaped through hole 14b. For example, of the above-described second recessed portion 14e, at least a circular arc-shaped corner portion 14e2 may be provided. Note that the second recessed portion 14e (i.e., groove 14e) may not necessarily be provided.

In addition, the plate member 14a may also be provided with a roughened surface portion 14a1, to which surface roughening is performed for improving the joining capability with the sealing member 30. The roughened surface portion 14a1 is a portion in which the surface roughness is relatively increased by performing a surface roughening process (surface treatment) for the material. The roughened surface portion 14a1 may be formed by processing such as laser application, sand blasting, or chemical etching, for example. In the plate member 14a, the roughened surface portion 14a1 may be provided around the through hole 14b. The roughened surface portion 14a1 may be provided inward further than the position against which the mold 60 is to be pressed (i.e., the groove 14e). In this embodiment, the roughened surface portion 14a1 is provided in a region inward of the recessed portion 14f. The roughened surface portion 14a1 may be formed on the inner circumferential surface of the through hole 14b. Providing the roughened surface portion 14a1 on the plate member 14a improves the joining capability between the plate member 14a and the sealing member 30. The surface roughness (arithmetical mean roughness Ra) of the roughened surface portion 14a1 is higher than the portion that is not processed by a surface roughening process. The arithmetical mean roughness Ra may be measured, for example, according to JIS B 0601:2001, using a stylus-type surface roughness measuring instrument.

In this embodiment, the surface roughening is performed by laser application. Using laser application for the surface roughening process eliminates the need for covering, removal, or the like during the processing. This facilitates mass production of the plate member 14a.

The surface morphology of the roughened surface portion 14a1 is not particularly limited. The surface that is roughened by laser application may form a large number of protrusions that are raised from the pre-processed base material surface because fumes are attached thereto during processing. The surface that is roughened by chemical etching may form a large number of recesses that are recessed from the pre-processed base material surface. Note that the surface of the roughened surface portion 14a1 is not limited to the form in which protrusions and recesses are formed. The surface of the roughened surface portion 14a1 may also be a porous surface in which a large number of micropores are formed. The surface of the roughened surface portion 14a1 may also be a surface on which a large number of hook-shaped protrusions such that the surface is warped upward in a thin-layered form.

The timing for the surface roughening process is not particularly limited. In this embodiment, the surface roughening process is performed between the recessed portion 14f and the through hole 14b after the recessed portion 14f has been formed. It is also possible that, after the recessed portion 14f has been formed in the above-described manner, the surface roughening process may be performed for the surface of the plate member 14a from the edge of the recessed portion 14f along the edge of the through hole 14b. This may improve the positional accuracy of the surface roughening process. In addition, when the recessed portion 14f is formed in advance, the processing for forming the recessed portion 14f does not adversely affect the roughened surface portion 14a1, so the quality of the roughened surface portion 14a1 may be improved.

### Step S20 of Placing Plate Member 14a in Mold 60

In step S10 of placing the plate member 14a in the mold 60, the electrode terminal 20 and the plate member 14a are placed in the mold 60 with the electrode terminal 20 being inserted through the through hole 14b, as illustrated in Fig. 5. At this time, the electrode terminal 20 and the plate member 14a are placed in the mold 60 so that the electrode terminal 20 and the plate member 14a do not come into contact with each other.

In this embodiment, the electrode terminal 20 includes a shaft portion 22 and a plate portion 24. The shaft portion 22 is a portion that is to be inserted in the through hole 14b. The shaft portion 22 is an oblong plate-shaped member extending along a height direction Z. The shape of the shaft portion 22 is not limited to a plate shape but may be, for example, a columnar shape (such as a cylindrical columnar shape and a prismatic columnar shape). In the electricity storage device 100 after manufacture, the shaft portion 22 is housed inside the case 10 and is connected to the electrode body 40 (see Fig. 9). The shaft portion 22 may be connected to the electrode body 40 via a current collector terminal or the like.

The plate portion 24 is a portion that is to be disposed along the plate member 14a when the shaft portion 22 is inserted in the through hole 14b. The plate portion 24 is continuous from the upper end of the shaft portion 22. The plate portion 24 is a portion that is exposed outside the case 10 so as to be connected to an external conductive member, such as a bus bar (see Fig. 1). The plate portion 24 extend along the widthwise axis X (see Fig. 1). The planar shape of the plate portion 24 is a substantially rectangular shape. The plate portion 24 and the shaft portion 22 may be formed by bending an oblong plate-shaped conductive member. The electrode terminal may not necessarily be an integral component in which the shaft portion and the plate portion are continuous. For example, the electrode terminal may be constructed by fabricating the shaft portion and the plate portions separately from each other and combining them together.

The electrode terminal 20 may include a portion that has been subjected to a surface roughening process. A surface of the electrode terminal 20 that is housed in the mold 60 and also is exposed to the internal space of the mold 60 may be subjected to the surface roughening process. Allowing the electrode terminal 20 to contain a portion subjected to the surface roughening process may improved the j oining capability between the electrode terminal 20 and the sealing member 30. The method of surface roughening the electrode terminal 20 may be the same as the method of surface roughening the plate member 14a, so the detailed description thereof will not be given further.

The configuration of the mold 60 may be set as appropriate according to the shapes of the plate member 14a and the electrode terminal 20. In this embodiment, the mold 60 includes a lower mold 61 and an upper mold 66. The material for the mold 60 is not limited to any particular material, but may be composed of a high strength metal material, such as stainless steel-based material, die steel-based material, maraging steel-based material, for example.

The lower mold 61 is a mold on which the plate member 14a and the electrode terminal 20 are placed. The lower mold 61 includes an upper surface 62, on which the plate member 14a is placed, and a recessed portion 63, which is recessed downward from the upper surface 62.

As illustrated in Fig. 5, the upper surface 62 of the lower mold 61 is a flat surface extending along the outer surface 14c of the plate member 14a. The outer surface 14c of the plate member 14a is placed on the upper surface 62. The lower mold 61 includes a protruding portion 62a, which is to be pressed against the circumferential periphery around the through hole 14b of the plate member 14a. The protruding portion 62a protrudes upward from the upper surface 62 of the lower mold 61. The protruding portion 62a is provided circumferentially continuously so as to surround the through hole 14b when the plate member 14a is placed on the lower mold 61. The recessed portion 63 has a shape along the shape of the plate portion 24. The recessed portion 63 is recessed in a substantially rectangular shape. The depth of the recessed portion 63 is slightly less than the thickness of the plate portion 24 of the electrode terminal 20. The depth of the recessed portion 63 is not limited to any particular depth. The recessed portion 63 functions as a cavity surface in a later step of integrally molding.

The upper mold 66 is a mold that is to be pressed onto the plate member 14a. The upper mold 66 includes a lower surface 67, which is placed on the plate member 14a, and a recessed portion 68, which is recessed upward from the lower surface 67. The lower surface 67 of the upper mold 66 is a flat surface extending along the inner surface 14d of the plate member 14a. The lower surface 67 is placed on the inner surface 14d of the plate member 14a (see Fig. 6). The upper mold 66 includes a protruding portion 67a that is to be pressed against the circumferential periphery around the through hole 14b of the plate member 14a. The protruding portion 67a protrudes downward from the lower surface 67 of the upper mold 66. The protruding portion 67a is provided circumferentially continuously so as to surround the through hole 14b when the upper mold 66 is placed on the plate member 14a. Like the recessed portion 63, the recessed portion 68 has a shape along the shape of the plate portion 24. The recessed portion 68 is recessed in a substantially rectangular shape. The depth of the recessed portion 68 is substantially the same as the depth of the recessed portion 63. The depth of the recessed portion 68 is not limited to any particular depth. The recessed portion 68 of the upper mold 66 is provided with a through hole 68a through which the shaft portion 22 of the electrode terminal 20 passes. The recessed portion 68 is also provided with a filling port 69. The injection port 69 is a hole for injecting a resin 31 (see Fig. 7) into the mold 60. The recessed portion 68 functions as a cavity surface in a later step of integrally molding.

The shapes, dimensions, arrangements, and the like of the protruding portions 62a and 67a are not particularly limited and may be determined according to the configuration of the plate member 14a. The protruding portions 62a and 67a protrude in a substantially wedge shape in cross section when viewed along a direction in which the protruding portions 62a and 67a are continuously provided. The protruding portions 62a and 67a become narrower toward the height direction of the protruding portions 62a and 67a. The protruding portions 62a and 67a have substantially the same shape and dimensions. In this embodiment, the protruding portions 62a and 67a are provided at corresponding positions with respect to the vertical direction. In this embodiment, the protruding portions 62a and 67a are provided respectively at positions that overlap the second recessed portions 14e formed on the outer surface 14c and the inner surface 14d of the plate member 14a. The height of the protruding portions 62a and 67a is greater than the depth of the second recessed portions 14e.

On the upper surface 62 of the lower mold 61, the plate member 14a is placed such that the outer surface 14c faces downward. In this embodiment, the plate member 14a is placed on the lower mold 61 so that the second recessed portion 14e can fit on the protruding portion 62a on the upper surface 62 of the lower mold 61. The plate member 14a is supported by the protruding portion 62a. The outer surface 14c of the plate member 14a is slightly lifted from the upper surface 62 of the lower mold 61. On the bottom surface of the recessed portion 63 of the lower mold 61, the plate portion 24 of the electrode terminal 20 is placed so that the upper surface 24a faces downward. The electrode terminal 20 passes through the through hole 14b in the plate member 14a. The upper surface 24a of the plate portion 24 of the electrode terminal 20 protrudes downward further than the outer surface 14c of the plate member 14a.

In step S20 of placing a plate member 14a in the mold 60, the plate member 14a is mold clamped by the lower mold 61 and the upper mold 66. The lower mold 61 may be mounted on a base, not shown. The upper mold 66 may be mounted on a press machine, not shown.

As illustrated in Fig. 6, the plate member 14a is clamped and pressed between the lower mold 61 and the upper mold 66 with the electrode terminal 20 being inserted through the through hole 14b. The protruding portion 67a of the upper mold 66 is pressed against the second recessed portion 14e in the inner surface 14d of the plate member 14a. The plate member 14a is pressed by the protruding portion 62a of the lower mold 61 and the protruding portion 67a of the upper mold 66, which are provided at corresponding positions with respect to the vertical direction. The protruding portions 62a and 67a of the lower mold 61 and the upper mold 66 are pressed against the circumferential periphery (the second recessed portions 14e in this embodiment) around the through hole 14b. At this time, the protruding portions 62a and 67a bite into the circumferential periphery around the through hole 14b, deforming the circumferential periphery around the portion against which the protruding portions 62a and 67a are pressed. Under the condition in which the protruding portions 62a and 67a bite into the circumferential periphery around the through hole 14b and the plate member 14a is mold clamped, the resin 31 (see Fig. 7) is poured into the mold 60.

### Step S30 of Integrally Molding Plate Member 14a and Sealing Member 30

In step S30 of integrally molding a plate member 14a and a sealing member 30, a resin is poured into the mold 60 to integrally mold the plate member 14a and the sealing member 30. Herein, the plate member 14a, the electrode terminal 20, and the sealing member 30 are molded integrally with each other. The sealing member 30 is a member for sealing the plate member 14a.

As illustrated in Fig. 7, the resin 31 is poured into the mold 60 in which the electrode terminal 20 and the plate member 14a have been placed. The electrode terminal 20 and the plate member 14a are joined via the sealing member 30 by what is called injection molding. Herein, the resin 31 is poured through the injection port 69 of the upper mold 66. The resin 31 flows into the space enclosed by the recessed portion 63 of the lower mold 61, the recessed portion 68 of the upper mold 66, the plate member 14a, and the electrode terminal 20.

For the resin 31, it is possible to use thermoplastic resins, such as polyethylene, polyamide, polypropylene, and vinyl chloride. After the resin 31 has been poured, the mold 60 is cooled, and thereby the resin 31 is also cooled. The cooled resin 31 is cured, whereby the sealing member 30 is formed. This allows the sealing member 30 to fill the space between the plate member 14a and the electrode terminal 20. Thereby, the plate member 14a, the electrode terminal 20, and the sealing member 30 are integrally molded, to produce the case component 14.

The roughened surface portion 14a1 of the plate member 14a has a high surface roughness, allowing the resin 31 to be easily impregnated on the surface of the roughened surface portion 14a1. The resin 31 cures with it being impregnated on the surface of the roughened surface portion 14a1. This facilitates improving the joining strength between the electrode terminal 20 and the cured sealing member 30 due to what is called an anchoring effect.

It should be noted that the plate member 14a and the electrode terminal 20 are disposed in the mold 60 so as not to be in contact with each other. This allows the sealing member 30 to be interposed between the plate member 14a and the electrode terminal 20 in the case component 14. This serves to reduce interference between the plate member 14a and the electrode terminal 20. The upper surface 24a of the plate portion 24 of the electrode terminal 20 is exposed outside case 10 without being covered by the sealing member 30.

When the plate member is placed in the mold and the protruding portion of the mold is pressed against the circumferential periphery around the through hole, the plate member may be deformed because of the pressing by the protruding portion. For example, the portion of the plate member against which the protruding portion is pressed may be depressed by the protruding portion of the mold. According to the present inventor's knowledge, when the portion against which the protruding portion is pressed is depressed, the circumferential periphery thereof may in some cases be raised accordingly. For example, a raised portion may be formed by plastic deformation in the region between the through hole and the portion against which the protruding portion is pressed. This may impair flatness in the region between the through hole and the portion against which the protruding portion is pressed. This may weaken the joining between the plate member and the sealing member.

In the above-described embodiment, the method of manufacturing a case component 14 includes step S10 of preparing a plate member 14a, step S20 of placing the plate member 14a in a mold 60, and step S30 of integrally molding a sealing member 30 with the plate member 14a. In step S30 of integrally molding the sealing member 30 with the plate member 14a, a resin 31 is poured into the mold 60 to integrally mold the plate member 14a with the sealing member 30, which seals the plate member 14a. The mold 60 includes protruding portions 62a and 67a that are to be pressed against the circumferential periphery around the through hole 14b of the plate member 14a. Step S20 of placing the plate member 14a in the mold 60 includes pressing the protruding portions 62a and 67a of the mold 60 against the circumferential periphery around the through hole 14b of the plate member 14a. The plate member 14a includes a recessed portion 14f formed between the through hole 14b and positions against which the protruding portions 62a and 67a of the mold 60 are pressed.

As illustrated in Fig. 8, the protruding portions 62a and 67a are pressed against the plate member 14a, and in the plate member 14a, the circumferential peripheries around the pressed portions are deformed. At this time, because the recessed portion 14f is formed between the through hole 14b and the positions against which the protruding portions 62a and 67a of the mold 60 are pressed, deformation tends to occur between the through hole 14b and the positions where the protruding portions 62a and 67a are pressed. For example, because of the protruding portions 62a and 67a pressing the plate member 14a, the portion of the plate member 14a that is between the recessed portion 14f and the positions against which the protruding portions 62a and 67a are pressed is more likely to be deformed toward the recessed portion 14f. Therefore, the region closer to the through hole 14b than the recessed portion 14f is less likely to be affected by the deformation caused by the pressing by the protruding portions 62a and 67a. Thus, the region between the through hole 14b and the recessed portion 14f is easily kept in a flat condition. As a result, the plate member 14a and the sealing member 30 after being integrally formed show good joining capability. This serves to improve hermeticity effected by the sealing member 30 in the electricity storage device 100.

Although the dimensions and the like of the recessed portion 14f are not particularly limited, it is possible that the dimensions of the recessed portion 14f may be determined according to the amount of deformation caused by the protruding portions 62a and 67a pressing the plate member 14a. For example, the volumetric capacity of the recessed portion 14f of the plate member 14a may be set to greater than or equal to the volume of the protruding portions 62a and 67a that bite into the plate member 14a when the protruding portions 62a and 67a of the mold 60 are pressed against the circumferential periphery around the through hole 14b of the plate member 14a. This allows the region closer to the through hole 14b than the recessed portion 14f to be even less likely to be affected by the deformation caused by the pressing by the protruding portions 62a and 67a.

In the above-described embodiment, the region of the plate member 14a that is at least between the recessed portion 14f and the through hole 14b is subjected to a surface roughening process for improving the joining capability with the sealing member 30. Such a plate member 14a is also unlikely to cause deformation in the region between the recessed portion 14f and the through hole 14b to thereby easily maintain the surface roughened portion. As a result, the joining capability between the plate member 14a and the sealing member 30 may be favorable due to the anchoring effect.

In the above-described embodiment, the plate member 14a is provided with the second recessed portion 14e at the positions against which the protruding portions 62a and 67a of the mold 60 are to be pressed. This makes the positioning of the plate member 14a relative to the mold 60 easier. Moreover, because the positions against which the protruding portions 62a and 67a are pressed are recessed in advance, the amount of deformation of the plate member 14a may be reduced when the protruding portions 62a and 67a are pressed against the plate member 14a.

In the above-described embodiment, the through hole 14b of the plate member 14a is in a rectangular shape. The second recessed portion 14e is provided at least on the outside of a corner portion 14b2 of the rectangular-shaped through hole 14b. In comparison with the linear portion 14b1, the corner portion 14b2 has a smaller area from the corner portion 14b2 of the through hole 14b to the corner portion 14e2 of the second recessed portion 14e relative to the size of the portion against which the protruding portions 62a and 67a are pressed. For this reason, the region between the corner portion 14b2 of the through hole 14b and the corner portion 14e2 of the second recessed portion 14e may result in a greater amount of deformation per unit area. Providing the second recessed portion 14e on the outside of the corner portion 14b2 serves to easily reduce the deformation in the portion that is likely to result in a greater amount of deformation. For the same reason, when the recessed portion 14f is provided partially in the circumferential periphery around the through hole 14b, it may be provided on the outside of the corner portion 14b2.

In the above-described embodiment, the second recessed portion 14e of the plate member 14a surrounds the circumferential periphery around the through hole 14b entirely circumferentially. This serves to reduce deformation even when the deformation occurs in any region between the through hole 14b and the second recessed portion 14e.

In addition, the recessed portion 14f of the plate member 14a surrounds the circumferential periphery around the through hole 14b entirely circumferentially. This serves to reduce deformation even when the deformation occurs in any region between the through hole 14b and the second recessed portion 14e.

In the above-described embodiment, the protruding portions 62a and 67a of the mold 60 are in a wedge shape. This serves to prevent the resin 31 from flowing out of the mold 60. Moreover, the dimensions of the protruding portions 62a and 67a that bite into the plate member 14a are relatively reduced, which may reduce deformation of the plate member 14a.

In the above-described embodiment, the recessed portion 14f is provided proximate to the positions against which the protruding portions 62a and 67a of the mold 60 are to be pressed. This allows the deformation of the plate member 14a that is caused by pressing by the protruding portions 62a and 67a to be easily restricted within a narrow area.

The case component 14 manufactured by the above-described method includes, as illustrated in Fig. 9, a plate member 14a including a through hole 14b formed therein, an electrode terminal 20 inserted through the through hole 14b of the plate member 14a, and a sealing member 30 interposed between the electrode terminal 20 and a plate portion 24. The plate member 14a includes a continuous groove 14e surrounding the through hole 14b, and a recessed portion 14f formed between the groove 14e and the through hole 14b. The sealing member 30 fits in the recessed portion 14f. The case component 14 may be used as the lid 14 of the electricity storage device 100. In addition, the electricity storage device 100 may be produced by housing the electrode body into the case main body 12 and sealing the opening of the case main body 12 with the lid 14 by any known method.

Note that the case component 14 is not limited to the embodiments described above. When a case main body is provided with an electrode terminal and a sealing member, it is also possible to manufacture a case component as the case main body according to the method described above. The case component disclosed herein may constitute a case main body or a lid.

The case component 14 disclosed herein includes the plate member 14a, the electrode terminal 20, and the sealing member 30 that are molded integrally with each other. However, such embodiments are merely illustrative. The above-described method of manufacturing a case component 14 may also be applied to the cases that a member that is to be integrally molded with a case 10, such as a safety valve or the like, for example, is manufactured as a separate component from the case 10.

Various embodiments of the technology according to the present disclosure have been described hereinabove. Unless specifically stated otherwise, the embodiments described herein do not limit the scope of the present disclosure. It should be noted that various other modifications and alterations may be possible in the embodiments of the technology disclosed herein. In addition, the features, structures, or steps described herein may be omitted as appropriate, or may be combined in any suitable combinations, unless specifically stated otherwise. In addition, the present description includes the disclosure as set forth in the following items.

### Item 1:

A method of manufacturing an electricity storage device case component, the method including the steps of:
preparing a plate member in which a through hole is formed;
placing the plate member in a mold; and
integrally molding a sealing member sealing the plate member with the plate member by pouring a resin into the mold, wherein:
the mold includes a protruding portion to be pressed against a circumferential periphery around the through hole of the plate member;
the step of placing the plate member in the mold includes pressing the protruding portion of the mold against the circumferential periphery around the through hole of the plate member; and
the plate member includes a recessed portion formed between the through hole and a position against which the protruding portion of the mold is to be pressed.

### Item 2:

The method according to item 1, wherein the plate member is subjected to a surface roughening process in at least a region of the plate member that is between the recessed portion and the through hole.

### Item 3:

The method according to item 2, wherein the step of preparing the plate member includes forming the recessed portion in the plate member, and performing the surface roughening process in the region of the plate member between the recessed portion and the through hole subsequent to the forming the recessed portion.

### Item 4:

The method according to any one of items 1 to 3, wherein the plate member includes a second recessed portion provided at a position against which the protruding portion of the mold is to be pressed.

### Item 5:

The method according to item 4, wherein the through hole of the plate member is in a rectangular shape, and the second recessed portion is provided outside at least a corner portion of the rectangular-shaped through hole.

### Item 6:

The method according to item 4 or 5, wherein the second recessed portion of the plate member surrounds the through hole around its entire circumference.

### Item 7:

The method according to any one of items 1 to 6, wherein the recessed portion of the plate member has a volumetric capacity greater than or equal to a volume of the protruding portion that bites into the plate member when the protruding portion of the mold is pressed against the circumferential periphery around the through hole of the plate member.

### Item 8:

The method according to any one of items 1 to 7, wherein the recessed portion of the plate member surrounds the through hole around its entire circumference.

### Item 9:

The method according to any one of claims 1 to 8, wherein the protruding portion of the mold is in a wedge shape.

### Item 10:

The method according to any one of items 1 to 9, wherein the recessed portion is provided proximate to the position against which the protruding portion of the mold is to be pressed.

### Item 11:

An electricity storage device case component, including:
a plate member in which a through hole is formed;
an electrode terminal inserted through the through hole of the plate member; and
a sealing member interposed between the plate member and the electrode terminal, wherein:
the plate member includes a continuous groove surrounding the through hole, and a recessed portion formed between the groove and the through hole; and
the sealing member enters the recessed portion.

### Item 12:

An electricity storage device, including:
an electrode body;
a case main body including an opening, and housing the electrode body; and
a lid attached to the opening, wherein
the case main body or the lid is an electricity storage device case component according to item 11.

## Claims

1. A method of manufacturing an electricity storage device case component (14), the method comprising the steps of:
preparing a plate member (14a) (S10) in which a through hole (14b) is formed;
placing the plate member (14a) in a mold (60) (S20); and
integrally molding a sealing member (30) sealing the plate member (14a) with the plate member (14a) by pouring a resin (31) into the mold (60) (S30), wherein:
the mold (60) includes a protruding portion (62a,67a) to be pressed against a circumferential periphery around the through hole (14b) of the plate member (14a);
the step of placing the plate member (14a) in the mold (60) (S20) includes pressing the protruding portion (62a,67a) of the mold (60) against the circumferential periphery around the through hole (14b) of the plate member (14a); and
the plate member (14a) includes a recessed portion (14f) formed between the through hole (14b) and a position against which the protruding portion (62a,67a) of the mold (60) is to be pressed.

2. The method according to claim 1, wherein the plate member (14a) is subjected to a surface roughening process in at least a region of the plate member (14a) that is between the recessed portion (14f) and the through hole (14b).

3. The method according to claim 2, wherein the step of preparing the plate member (14a) (S10) includes forming the recessed portion (14f) in the plate member (14a), and performing the surface roughening process in the region of the plate member (14a) between the recessed portion (14f) and the through hole (14b) subsequent to the forming the recessed portion (14f).

4. The method according to any one of claims 1 to 3, wherein the plate member (14a) includes a second recessed portion (14e) provided at a position against which the protruding portion (62a,67a) of the mold (60) is to be pressed.

5. The method according to claim 4, wherein the through hole (14b) of the plate member (14a) is in a rectangular shape, and the second recessed portion (14e) is provided outside at least a corner portion of the rectangular-shaped through hole (14b).

6. The method according to claim 4, wherein the second recessed portion (14e) of the plate member (14a) surrounds the through hole (14b) around its entire circumference.

7. The method according to any one of claims 1 to 3, wherein the recessed portion (14f) of the plate member (14a) has a volumetric capacity greater than or equal to a volume of which the protruding portion (62a,67a) that bites into the plate member (14a) when the protruding portion (62a,67a) of the mold (60) is pressed against the circumferential periphery around the through hole (14b) of the plate member (14a).

8. The method according to any one of claims 1 to 3, wherein the recessed portion (14f) of the plate member (14a) surrounds the through hole (14b) around its entire circumference.

9. The method according to any one of claims 1 to 3, wherein the protruding portion (62a,67a) of the mold (60) is in a wedge shape.

10. The method according to any one of claims 1 to 3, wherein the recessed portion (14f) is provided proximate to the position against which the protruding portion (62a,67a) of the mold (60) is to be pressed.

11. An electricity storage device case component (12, 14) comprising:
a plate member (14a) in which a through hole (14b) is formed;
an electrode terminal (20) inserted through the through hole (14b) of the plate member (14a); and
a sealing member (30) interposed between the plate member (14a) and the electrode terminal (20), wherein:
the plate member (14a) includes a continuous groove (14e) surrounding the through hole (14b), and a recessed portion (14f) formed between the groove (14e) and the through hole (14b); and
the sealing member (30) enters the recessed portion (14f).

12. An electricity storage device comprising:
an electrode body (40);
a case main body (12) including an opening, and housing the electrode body; and
a lid (14) attached to the opening, wherein
the case main body (12) or the lid (14) comprises an electricity storage device case component according to claim 11.
